# EUROPEAN PATENT SPECIFICATION

(11) **EP 4 519 224 B1**
(45) Date of publication and mention of the grant of the patent: **22.04.2026**
(21) Application number: 23726627.5
(22) Date of filing: 04.05.2023
(51) Int. Cl.: C03C 14/00, C21C 1/02, C03C 10/00, C03C 10/16, C21C 7/064, C04B 14/22, C04B 18/02

(54) **FLUORITE SYNTHETIC STONES AND METHOD OF MAKING FLUORITE SYNTHETIC STONES**
FLUORIT-SYNTHESESTEINE UND VERFAHREN ZUR HERSTELLUNG VON FLUORIT-SYNTHESESTEINEN
PIERRES SYNTHÉTIQUES DE FLUORITE ET PROCÉDÉ DE FABRICATION DE PIERRES SYNTHÉTIQUES DE FLUORITE

(30) Priority: 06.05.2022 US 202263339019 P
(43) Date of publication of application: 12.03.2025
(73) Proprietor: Mexichem Fluor S.A. de C.V., C.P. 78395, S.L.P. (MX)
(72) Inventor: GUTIERREZ L., Luis Angel, Potosi, 78395 (MX); GARCÍA MARTÍNEZ, Gabriel A., Potosí, 78395 (MX); MARTÍNEZ COSTA, Iván, Potosí, 78395 (MX); RIVERA MARTÍNEZ, Rosa, Potosí, 78395 (MX); VENEGAS RODRÍGUEZ, Paloma, Potosí, 78395 (MX); CÁRDENAS DAW, Carlos, Potosí, 78395 (MX)
(74) Representative: Potter Clarkson
(86) International application number: PCT/IB2023/054669
(87) International publication number: WO 2023/214357

(56) References cited:
- EP-A1- 2 752 394
- CN-A- 103 789 511
- JP-A- S55 121 954
- JP-A- S61 159 506
- US-A- 4 767 725

## Description

### TECHNICAL FIELD

The present disclosure is related generally to slag additives for the steel industry and more particularly to fluorite synthetic stones.

### BACKGROUND

The refining process in steel production is by injection of oxygen and is an intensive process. Reactions occur in the hot metal but some others at the slag-metal interface, or the slag-gas interface. The interaction of the slag and the gas produces a "foam." Viscosity controls the properties of the foam. Secondary refinement of the steel aims to reduce carbon, sulfur and phosphorus impurities to very low levels. The slag floats on the molten metal, protecting the surface from oxidation and absorbing impurities dissolved in the molten metal. Typical compositions of slags are high in CaO with some additions of MgO. Fluorospar, a mineral including CaF₂, may be employed as a slag additive or flux to enhance removal of impurities such as sulfur and phosphorus from the molten metal and/or to enhance fluidity of the slag. However, reliance on fluorospar, which is a natural stone product with an uncontrolled supply, may put supply chains in jeopardy.

US4767725 describes a crystallized glass-ceramic molded product having a glass matrix and crystallized calcium fluoride and fluormica dispersed therein.

JPS55-121954 describes a technology for utilizing waste slag from the steel industry, and to an artificial stone (decorative river stone like imitation gemstones or marble) that is milky and opaque and can be colored as desired, made primarily from waste slag, and a method for manufacturing the same.

EP2752394 describes a method for manufacturing a glass-ceramic composite using natural raw material and waste glasses.

CN103789511 describes flux technology for slagging and phosphorus/sulfur removal in metal metallurgy, and particularly relates to fluorite spheres and a preparation method thereof.

JPS61-159506 describes a steel material having a very low concentration of P at a low cost by blending CaO-CaF₂-SiO₂ slag having a specified composition with a proper amount of Na₂O and by adding the resulting slag to molten iron to dephosphorize highly the molten iron at a low consumption unit of slag.

### BRIEF DESCRIPTION OF THE DRAWINGS

FIG. 1 is a flow chart of an exemplary method to produce fluorite synthetic stones.
FIG. 2 is a photograph of exemplary fluorite synthetic stones.
FIGS. 3A and 3B show portions of x-ray diffraction patterns for aggregates (green samples) and synthetic stones (sintered samples), respectively, prepared from a blend of beneficiated fluorospar and slimes having a Ca to Si weight ratio of about 2:1.

### DETAILED DESCRIPTION

Described in this disclosure is a fluorite synthetic stone that has a high CaF₂ content and stone-like characteristics for use in steelmaking and other applications. Fabricated using a novel method that includes formulation, aggregation, and sintering, the fluorite synthetic stone has a composite structure including CaF₂ crystals at a concentration of at least about 70 wt.% (and typically higher) dispersed in a glass matrix comprising Ca, Si, and O. When prepared under suitable process conditions with a predetermined weight ratio of Ca to Si, the fluorite synthetic stone may include an interparticle (matrix) phase surrounding the CaF₂ crystals that is believed to contribute to the exceptional properties of the synthetic stone product. For example, the synthetic stone may exhibit wear resistance, compressive strength and/or water absorption properties comparable or superior to those of natural stone. The fabrication process may be controlled such that the fluorite synthetic stone contains little to no carbon, sulfur, and/or phosphorus, impurities that may be detrimental to steelmaking. The synthetic stones may be added to a steel-making furnace containing molten steel and slag for the purpose of reducing the viscosity of the slag and/or increasing the capacity of the slag to remove impurities (e.g., sulfur) from the molten steel. Typically, 2-10 kg of the fluorite synthetic stones may be added per ton of steel.

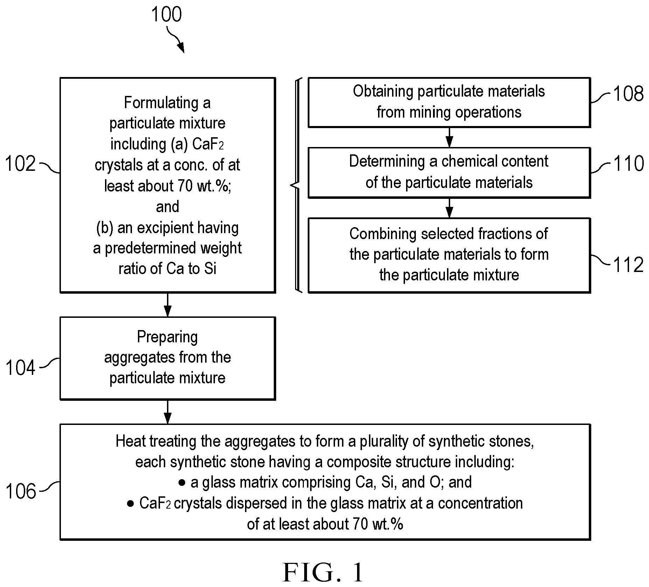

Before the fluorite synthetic stone is described in detail, a method of making the synthetic stone is explained in reference to FIG. 1. It is noted that the terms "fluorite synthetic stone" and "synthetic stone" are used alternately throughout the disclosure. Broadly speaking, the method 100 includes formulating 102 a particulate mixture including (a) CaF₂ crystals at a concentration of at least about 70 wt.%, and (b) an excipient having a predetermined weight ratio of Ca to Si. Aggregates are then prepared 104 from the particulate mixture, and the aggregates are heat treated 106 to form a plurality of fluorite synthetic stones, where each fluorite synthetic stone has a composite structure including: a glass matrix comprising Ca, Si, and O; and CaF₂ crystals dispersed in the glass matrix at a concentration of at least about 70 wt.%. More particularly, the glass matrix may include Ca and Si at the predetermined weight ratio, as discussed below.

Formulation 102 of the particulate mixture may include multiple steps, as indicated in FIG. 1. First, particulate materials may be obtained 108 from mining operations. This may entail collecting fluorospar and low-grade materials such as sludge, tailings and slimes from mining operations, followed by drying and/or sieving, as needed, to obtain the particulate materials. Various grades of fluorospar may be suitable. For example, the fluorospar may be acid-grade or beneficiated fluorospar which has been concentrated to 97%+ CaF₂. Alternatively, non-compliant acid-grade fluorospar, which includes about 90% CaF₂, may be used.

The chemical content of the particulate materials is then determined 110. Of particular interest is the concentration of Ca, F, and Si, which may be used to estimate the amount of CaF₂, SiO₂ CaO and/or CaCO₃ in the particulate materials. A chemical analysis method such as x-ray fluorescence (XRF), which is capable of determining concentrations of elements heavier than oxygen when suitable instruments are used, may be employed for determining 110 the chemical content.

Once the chemical content is known, selected fractions of the particulate materials are combined 112 to form the particulate mixture described above. It is understood that the excipient includes Ca, Si, and O, with little to no undesired impurities, such as S and P. Preferably, the excipient includes S at a concentration of less than about 0.1 wt.% and/or is devoid of S; also or alternatively, the excipient preferably includes P at a concentration of less than about 0.1 wt.% and/or is devoid of P. Any C present in the excipient is substantially or completely removed during a downstream processing step (heat treatment). For some applications, where it may be beneficial to have additional ceramic constituents in the fluorite synthetic stone product, one or more additional particulate materials, such as Al₂O₃ and/or MgO, may be added to the particulate mixture in desired amounts at this point in the process.

Aggregates are then prepared 104 from the particulate mixture, e.g., by mixing a binder into the particulate mixture, followed by granulation, compaction, extrusion, pelletizing, briquetting, and/or another shaping method to form the aggregates. For example, granulation to form the aggregates may be carried out in a rotating drum/disc, or a briquetting machine or extruder may be employed. The size of the aggregates may range from a few millimeters to a few centimeters in linear size (width or diameter). The binder added to the particulate mixture may comprise an organic binder, an inorganic binder, and/or an aqueous binder. In one example, the binder may comprise a sodium silicate solution (water glass). Typically, the binder is added to the particulate mixture in an amount from about 0.5 wt.% to about 10 wt.%, or from about 5 wt.% to about 7 wt.%.

In some examples, the aggregates are dried to improve their green strength before further processing. Drying of the aggregates may comprise evaporating or curing the binder, and may be carried out passively (e.g., in air) or actively (e.g., in a furnace at a suitable temperature).

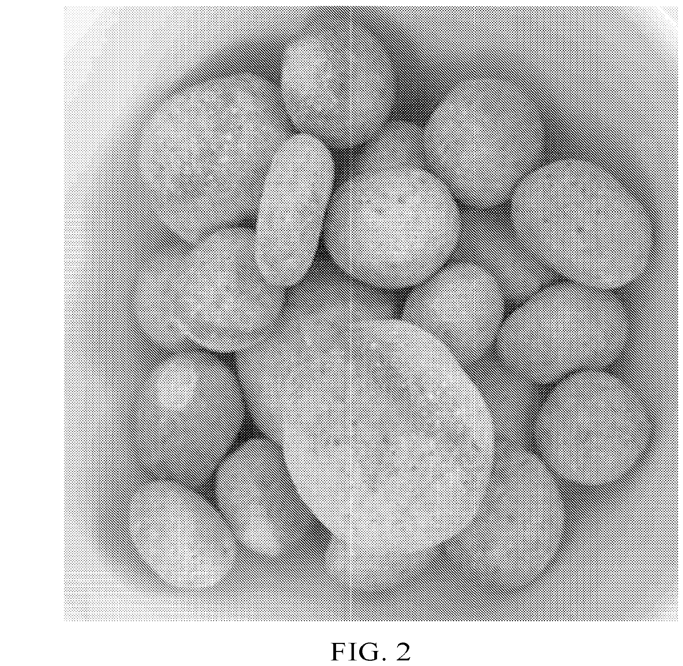

In order to effect sintering and decarburization, the aggregates undergo a heat treatment 106. Formed in the heat treatment 106 are a plurality of sintered synthetic stones, as shown for example in FIG. 2, where each fluorite synthetic stone includes CaF₂ crystals at a concentration of at least about 70 wt.% dispersed in a glass matrix comprising Ca, Si, and O. More typically, the concentration of the CaF₂ crystals is 80 wt.% or higher, or 90 wt.% or higher. In some examples, the CaF₂ crystals may be present at a concentration of at least about 92 wt.%, or at least about 94 wt.%, and/or as high as 96 wt.%. Under the conditions of the heat treatment, the excipient having the predetermined ratio of Ca to Si forms the glass matrix that at least partly surrounds the CaF₂ crystals. In addition, CaCO₃ present in the excipient may decompose into CO₂ gas and CaO, which may combine with silicon. The heat treatment may take place at a temperature of at least about 950°C, or at least about 1000°C. Typically the temperature is no higher than about 1200°C and/or is below the melting temperature of CaF₂. The time duration for the heat treatment may be at least about 20 minutes, at least about 40 minutes, or at least about 60 minutes, and/or up to about 120 minutes. The heat treatment may take place until CaCO₃, CaO, and/or SiO₂ crystals are no longer detectible by x-ray diffraction (XRD), and/or the carbon content is less than 1 wt.%. In some examples, as discussed below, the excipient may include excess Si, and thus the SiO₂ peaks may not completely disappear from the XRD pattern. Preferably, the CaCO₃ and/or the CaO peaks fully disappear. The heat treatment may entail furnace heating or microwave heating. The heat treatment may be carried out in air. In the latter case, prior to carrying out the microwave heating, the aggregates may be embedded in a susceptor material such as carbon.

The glass matrix of the fluorite synthetic stone may include one or more silicates and/or oxides, such as a Ca-Si-O compound (e.g., Ca₂SiO₃ and/or Ca₂SiO₄ (2CaO·SiO₂)), a Si-O compound (*e.g*., SiO₂) and/or a Ca-O compound (e.g., CaO). The glass matrix may be partially or fully amorphous (noncrystalline). Accordingly, in some examples the glass matrix may be at least partially crystalline. It is also contemplated that, under some processing conditions, the glass matrix may be fully crystallized. Preferably, the synthetic stone includes less than about 1 wt.% of free CaO (that is, CaO that is not part of a Ca-Si-O compound) and other water-absorbing phases, to reduce water absorption by the synthetic stone. The glass matrix may be partially fluorinated. Due to decarburization during the heat treatment, the amount of carbon in the sintered synthetic stone may be less than about 1 wt.%, less than about 0.1 wt.%, and/or preferably below the detectability limits of the measurement method.

To achieve the desired glass matrix, the predetermined weight ratio of Ca to Si in the excipient is preferably greater than 1, *e.g*., from about 2:1 to about 4:1. At Ca to Si ratios within this range, the fluorite synthetic stone produced upon sintering may comprise an amorphous interparticle phase that at least partly surrounds the CaF₂ crystals. This amorphous interparticle phase - *i.e*., the glass matrix - may include Ca and Si in the predetermined weight ratio (*e.g*., greater than 1, or from about 2:1 to about 4:1) and may contribute to the exceptional mechanical integrity and low water absorption of the fluorite synthetic stone.

For some applications, the excipient may include a Ca to Si weight ratio equal to or less than 1 (*e.g*., from 0.4:1 to 1:1). At lower Ca to Si ratios, the fluorite synthetic stone may include, in addition to the CaF₂ crystals, Si-containing crystalline phases such as SiO₂ dispersed in the glass matrix. While higher amounts of Si (or lower Ca to Si weight ratios) may hinder sintering, the resulting fluorite synthetic stone may have increased values of compressive strength due to the presence of the Si-containing crystalline phases. At lower Si contents (*e.g*., Ca:Si > 4:1), water absorption of the fluorite synthetic stone produced by the method may be detrimentally increased due to free CaO remaining in the sintered stone. As indicated above, the fluorite synthetic stone preferably includes a limited amount of free CaO.

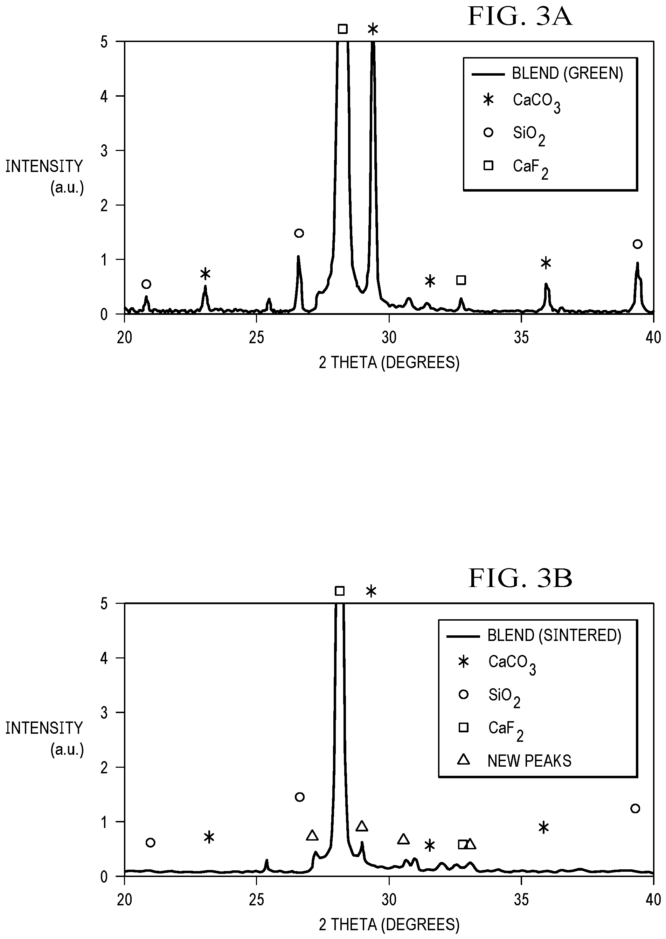

FIGS. 3A and 3B show portions of x-ray diffraction patterns for aggregates (green samples) and synthetic stones (sintered samples), respectively, prepared from a blend of beneficiated fluorospar and slimes having a Ca to Si weight ratio of about 2. The sintered samples were heat treated at 1200°C for 60 min. As can be seen, peaks in FIG. 3A corresponding to crystalline SiO₂ and CaCO₃ are not present in FIG. 3B, indicating amorphization during the heat treatment. In addition, new low intensity peaks (indicated by the arrows) that may correspond to a glassy silicate phase (*e.g*., CaSiO₃) are observed in FIG. 3B.

The CaF₂ crystals in the fluorite synthetic stone may have a linear size (*e.g*., a length and/or width) in a range from about 500 nm to about 500 microns, or more typically from about 1 micron to about 150 microns. The CaF₂ crystals may have a multi-modal size distribution in the glass matrix. As discussed above in regard to the Ca:Si ratio, the synthetic stone may further include, in some examples, SiO₂ crystals dispersed in the glass matrix. Also or alternatively, the synthetic stone may include additional ceramic constituents such as Al₂O₃ crystals and/or MgO crystals dispersed in the glass matrix. These optional additional ceramic crystals may have a linear size in the ranges set forth above for the CaF₂ crystals, and/or they may have a multimodal size distribution. Due to the elevated temperatures of the heat treatment, the binder present in the aggregates may be pyrolyzed or evaporated, and thus the fluorite synthetic stone may be devoid of a binder (*e.g*., an organic or aqueous binder). In other examples, such as when an inorganic binder is used, the binder may undergo a chemical transformation during the heat treatment and remain in the synthetic stone product in a transformed chemical state.

The porosity in the aggregates is significantly reduced during the heat treatment and the resulting sintered synthetic stone may include primarily or exclusively closed pores. The fluorite synthetic stone may have a density in a range from about 2.2 g/cm³ to about 3 g/cm³, as determined by buoyancy testing based on the Archimedes principle. The sintered stone may have a nominal linear size (width or diameter) in a range from a few millimeters to a few centimeters.

The fluorite synthetic stone prepared as described herein may exhibit characteristics and properties on par with or superior to natural stone. For example, the synthetic stone may exhibit a high resistance to attrition when subjected to a rotating drum test for 60 minutes; mass loss from the sample may be about 7 wt.% or less. Preliminary experiments reveal that the synthetic stone can withstand an average compressive force of at least about 1330 N prior to fracture. The synthetic stone may also or alternatively exhibit a water absorption of no more than about 0.1 wt.% after six days in a humidity chamber (>90% relative humidity).

The invention is defined by the claims.

Furthermore, the advantages described above are not necessarily the only advantages of the invention, and it is not necessarily expected that all of the described advantages will be achieved with every embodiment of the invention.

## Claims

1. A fluorite synthetic stone comprising:
a glass matrix comprising Ca, Si and O and having a predetermined weight ratio of Ca to Si; and
CaF₂ crystals dispersed in the glass matrix at a concentration of at least 70 wt.%.

2. The fluorite synthetic stone of claim 1, wherein the concentration is at least 80 wt.%, at least 90 wt.%, at least 92 wt.%, or at least 94 wt.%, and/or as high as 96 wt.%.

3. A method of using the fluorite synthetic stone of claim 1, the method comprising:
adding a plurality of the fluorite synthetic stones to a steel-making furnace containing slag and molten steel; preferably (i) wherein the addition of the fluorite synthetic stones reduces a viscosity of the slag, or (ii) wherein the addition of the fluorite synthetic stones increases a capacity of the slag to remove sulfur from the molten steel.

4. A method of making fluorite synthetic stones, the method comprising:
formulating a particulate mixture including:
CaF₂ crystals at a concentration of at least 70 wt.%; and
an excipient having a predetermined weight ratio of Ca to Si;
preparing aggregates from the particulate mixture; and
heat treating the aggregates to form a plurality of fluorite synthetic stones, each fluorite synthetic stone comprising: a glass matrix comprising Ca, Si and O; and CaF₂ crystals dispersed in the glass matrix at a concentration of at least 70 wt.%.

5. The method of claim 4, wherein formulating the particulate mixture comprises:
(a) obtaining particulate materials from mining operations;
(b) determining a chemical content of the particulate materials; preferably (i) determining a content of Ca, F and Si, or (ii) conducting x-ray fluorescence analysis on the particulate materials; more preferably further comprising estimating an amount of CaF₂, SiO₂, CaO, and/or CaCO₃; and
(c) combining selected fractions of the particulate materials to form the particulate mixture.

6. The method of claim 4, further comprising, after formulating the particulate mixture, adding one or more additional particulate materials to the particulate mixture, preferably wherein the one or more additional particulate materials are selected from the group consisting of Al₂O₃ and MgO.

7. The fluorite synthetic stone of claim 1 or the method of claim 4,
wherein the predetermined weight ratio is greater than 1, preferably wherein the predetermined weight ratio is from 2:1 to 4:1; or wherein the predetermined weight ratio is less than 1.

8. The method of claim 4, wherein preparing the aggregates comprises mixing a binder into the particulate mixture, the binder being selected from the group consisting of: an organic binder, an inorganic binder, and an aqueous binder; preferably (i) wherein the binder comprises a sodium silicate solution (water glass), or (ii) wherein the binder is added in an amount from 2 wt.% to 10 wt.%, or from 5 wt.% to 7 wt.%.

9. The method of claim 4, wherein preparing the aggregates comprises granulation, compaction, extrusion, pelletizing, and/or briquetting; or wherein the method, further comprises, prior to heat treating the aggregates, drying the aggregates to improve green strength, preferably wherein the drying comprises evaporating or curing the binder.

10. The method of claim 4, wherein the aggregates are heat treated at a temperature of at least 950°C, or at least 1000°C, and/or no higher than 1200°C; or wherein the aggregates are heat treated for a time duration of at least 20 minutes, at least 40 minutes, at least 60 minutes, and/or up to 120 minutes; or wherein the aggregates are heated treated until CaCO₃, CaO, and/or SiO₂ crystals are no longer detectible by x-ray diffraction; or wherein the heat treating comprises furnace heating or microwave heating, preferably wherein, prior to carrying out the microwave heating, the aggregate is embedded in a susceptor material.

11. The fluorite synthetic stone of claim 1 or the method of claim 4, wherein the glass matrix comprises one or more silicates and/or oxides; or wherein the glass matrix comprises a Ca-Si-O compound selected from the group consisting of Ca₂SiO₃ and Ca₂SiO₄ (2CaO·SiO₂); or wherein the glass matrix is partially fluorinated; or wherein the glass matrix includes free CaO at a concentration less than 1 wt.%.

12. The fluorite synthetic stone of claim 1 or the method of claim 4,
wherein the CaF₂ crystals have a linear size in a range from 500 nm to 500 microns, preferably wherein the linear size is in the range from 1 micron to 150 microns; or wherein the CaF₂ crystals have a multi-modal size distribution.

13. The fluorite synthetic stone of claim 1 or the method of claim 4,
wherein each fluorite synthetic stone further comprises SiO₂ crystals dispersed in the glass matrix; or wherein each fluorite synthetic stone further comprises Al₂O₃ crystals and/or MgO crystals dispersed in the glass matrix.

14. The fluorite synthetic stone of claim 1 or the method of claim 4,
wherein the fluorite synthetic stones include C at a concentration less than 1 wt.% and/or are devoid of C; or wherein the fluorite synthetic stones include CaCO₃ at a concentration less than 2 wt.% and/or are devoid of CaCO₃; or wherein the fluorite synthetic stones include S at a concentration less than 0.1 wt.% and/or are devoid of S; or wherein the fluorite synthetic stones include P at a concentration less than 0.1 wt.% and/or are devoid of P; or wherein the fluorite synthetic stones are devoid of a binder.

15. The fluorite synthetic stone of claim 1 or the method of claim 4,
wherein the fluorite synthetic stones have a density in a range from 2.2 g/cm³ to 3 g/cm³, as determined by Archimedes principle buoyancy testing; or wherein, after the fluorite synthetic stones are subjected to a rotating drum test for 60 minutes, mass loss from the fluorite synthetic stones is 7 wt.% or less; or wherein the fluorite synthetic stones sustain an average compressive force of at least 1330 N prior to failure; or wherein the fluorite synthetic stones exhibit an absorption of water of no more than 0.1 wt.% after six days in a humidity chamber (>90% relative humidity); or wherein the fluorite synthetic stones have a nominal size in a range from a few millimeters to a few centimeters.

## Patentansprüche

1. Synthetischer Fluoritstein, umfassend:
eine Glasmatrix, umfassend Ca, Si und O und mit einem vorbestimmten Gewichtsverhältnis von Ca zu Si; und
CaF₂-Kristalle, die in der Glasmatrix in einer Konzentration von mindestens 70 Gew.-% dispergiert sind.

2. Synthetischer Fluoritstein nach Anspruch 1, wobei die Konzentration mindestens 80 Gew.-%, mindestens 90 Gew.-%, mindestens 92 Gew.-% oder mindestens 94 Gew.-% und/oder bis zu 96 Gew.-% beträgt.

3. Verfahren zum Verwenden des synthetischen Fluoritsteins nach Anspruch 1, das Verfahren umfassend:
Zugeben einer Vielzahl der synthetischen Fluoritsteine zu einem Stahlherstellungsofen, der Schlacke und geschmolzenen Stahl enthält; vorzugsweise (i) wobei die Zugabe der synthetischen Fluoritsteine die Viskosität der Schlacke verringert, oder (ii) wobei die Zugabe der synthetischen Fluoritsteine die Fähigkeit der Schlacke erhöht, Schwefel aus dem geschmolzenen Stahl zu entfernen.

4. Verfahren zum Herstellen von synthetischen Fluoritsteinen, das Verfahren umfassend:
Formulieren einer partikulären Mischung, die Folgendes einschließt:
CaF₂-Kristalle in einer Konzentration von mindestens 70 Gew.-%; und
einen Hilfsstoff, der ein vorbestimmtes Gewichtsverhältnis von Ca zu Si aufweist;
Herstellen von Aggregaten aus der partikulären Mischung; und
Wärmebehandeln der Aggregate, um eine Vielzahl von synthetischen Fluoritsteinen zu bilden, jeder synthetische Fluoritstein umfassend: eine Glasmatrix, umfassend Ca, Si und O; und CaF₂-Kristalle, dispergiert in der Glasmatrix in einer Konzentration von mindestens 70 Gew.-%.

5. Verfahren nach Anspruch 4, wobei das Formulieren der partikulären Mischung Folgendes umfasst:
(a) Erhalten von partikulärem Material aus dem Bergbau;
(b) Bestimmen eines chemischen Gehalts der partikulären Materialien; vorzugsweise (i) Bestimmen eines Gehalts an Ca, F und Si, oder (ii) Durchführen einer Röntgenfluoreszenzanalyse an den partikulären Materialien; vorzugsweise ferner umfassend das Schätzen einer Menge an CaF₂, SiO₂, CaO und/oder CaCO₃; und
(c) Kombinieren ausgewählter Fraktionen der partikulären Materialien, um die partikuläre Mischung zu bilden.

6. Verfahren nach Anspruch 4, ferner umfassend, nach dem Formulieren der partikulären Mischung, das Zugeben eines oder mehrerer zusätzlicher partikulärer Materialien zu der partikulären Mischung, wobei das eine oder die mehreren zusätzlichen partikulären Materialien vorzugsweise aus der Gruppe ausgewählt sind, die aus Al₂O₃ und MgO besteht.

7. Synthetischer Fluoritstein nach Anspruch 1 oder Verfahren nach Anspruch 4, wobei das vorbestimmte Gewichtsverhältnis größer als 1 ist, vorzugsweise wobei das vorbestimmte Gewichtsverhältnis von 2:1 bis 4:1 beträgt; oder wobei das vorbestimmte Gewichtsverhältnis kleiner als 1 ist.

8. Verfahren nach Anspruch 4, wobei das Herstellen der Aggregate das Mischen eines Bindemittels in die partikuläre Mischung umfasst, wobei das Bindemittel ausgewählt ist aus der Gruppe, bestehend aus: einem organischen Bindemittel, einem anorganischen Bindemittel und einem wässrigen Bindemittel; vorzugsweise (i) wobei das Bindemittel eine Natriumsilikatlösung (Wasserglas) umfasst, oder (ii) wobei das Bindemittel in einer Menge von 2 Gew.-% bis 10 Gew.-% oder von 5 Gew.-% bis 7 Gew.-% zugegeben wird.

9. Verfahren nach Anspruch 4, wobei das Herstellen der Zuschlagstoffe das Granulieren, Verdichten, Extrudieren, Pelletieren und/oder Brikettieren umfasst; oder wobei das Verfahren ferner vor dem Wärmebehandeln der Zuschlagstoffe das Trocknen der Zuschlagstoffe zur Verbesserung der Grünfestigkeit umfasst, wobei das Trocknen vorzugsweise das Verdampfen oder Aushärten des Bindemittels umfasst.

10. Verfahren nach Anspruch 4, wobei die Aggregate bei einer Temperatur von mindestens 950 °C oder mindestens 1000 °C und/oder nicht höher als 1200 °C wärmebehandelt werden; oder wobei die Aggregate für eine Zeitdauer von mindestens 20 Minuten, mindestens 40 Minuten, mindestens 60 Minuten und/oder bis zu 120 Minuten wärmebehandelt werden; oder wobei die Aggregate wärmebehandelt werden, bis CaCO₃-, CaO- und/oder SiO₂-Kristalle nicht mehr durch Röntgenbeugung nachweisbar sind; oder wobei das Wärmebehandeln Ofenerwärmung oder Mikrowellenerwärmung umfasst, wobei vor der Durchführung der Mikrowellenerwärmung das Aggregat vorzugsweise in ein Suszeptormaterial eingebettet wird.

11. Synthetischer Fluoritstein nach Anspruch 1 oder Verfahren nach Anspruch 4, wobei die Glasmatrix ein oder mehrere Silikate und/oder Oxide umfasst; oder wobei die Glasmatrix eine Ca-Si-O-Verbindung umfasst, die aus der Gruppe, bestehend aus Ca₂SiO₃ und Ca₂SiO₄ (2CaO·SiO₂), ausgewählt ist; oder wobei die Glasmatrix teilweise fluoriert ist; oder wobei die Glasmatrix freies CaO in einer Konzentration von weniger als 1 Gew.-% einschließt.

12. Synthetischer Fluoritstein nach Anspruch 1 oder Verfahren nach Anspruch 4, wobei die CaF₂-Kristalle eine lineare Größe in einem Bereich von 500 nm bis 500 Mikron aufweisen, vorzugsweise wobei die lineare Größe im Bereich von 1 Mikron bis 150 Mikron liegt; oder wobei die CaF₂-Kristalle eine multimodale Größenverteilung aufweisen.

13. Synthetischer Fluoritstein nach Anspruch 1 oder Verfahren nach Anspruch 4, wobei jeder synthetische Fluoritstein ferner in der Glasmatrix dispergierte SiO₂-Kristalle umfasst; oder wobei jeder synthetische Fluoritstein ferner in der Glasmatrix dispergierte Al₂O₃-Kristalle und/oder MgO-Kristalle umfasst.

14. Synthetischer Fluoritstein nach Anspruch 1 oder Verfahren nach Anspruch 4, wobei die synthetischen Fluoritsteine C in einer Konzentration von weniger als 1 Gew.-% einschließen und/oder frei von C sind; oder wobei die synthetischen Fluoritsteine CaCO₃ in einer Konzentration von weniger als 2 Gew. % einschließen und/oder frei von CaCO₃ sind; oder wobei die synthetischen Fluoritsteine S in einer Konzentration von weniger als 0,1 Gew.% einschließen und/oder frei von S sind; oder wobei die synthetischen Fluoritsteine P in einer Konzentration von weniger als 0,1 Gew.% einschließen und/oder frei von P sind; oder wobei die synthetischen Fluoritsteine frei von einem Bindemittel sind.

15. Synthetischer Fluoritstein nach Anspruch 1 oder Verfahren nach Anspruch 4, wobei die synthetischen Fluoritsteine eine Dichte im Bereich von 2,2 g/cm³ bis 3 g/cm³ aufweisen, wie durch einen Auftriebstest nach dem archimedischen Prinzip bestimmt; oder wobei, nachdem die synthetischen Fluoritsteine 60 Minuten lang einem rotierenden Trommeltest unterzogen wurden, der Massenverlust der synthetischen Fluoritsteine 7 Gew. % oder weniger beträgt; oder wobei die synthetischen Fluoritsteine einer durchschnittlichen Druckkraft von mindestens 1330 N standhalten, bevor sie versagen; oder wobei die synthetischen Fluoritsteine nach sechs Tagen in einer Feuchtigkeitskammer (>90 % relative Luftfeuchtigkeit) eine Wasserabsorption von nicht mehr als 0,1 Gew.-% aufweisen; oder wobei die synthetischen Fluoritsteine eine Nenngröße in einem Bereich von einigen Millimetern bis einigen Zentimetern aufweisen.

## Revendications

1. Pierre synthétique de fluorite comprenant :
une matrice de verre comprenant Ca, Si et O et présentant un rapport pondéral prédéterminé de Ca à Si ; et
Cristaux de CaF₂ dispersés dans la matrice de verre à une concentration d'au moins 70% en poids.

2. Pierre synthétique de fluorite selon la revendication 1, dans laquelle la concentration est d'au moins 80% en poids, d'au moins 90% en poids, d'au moins 92% en poids ou d'au moins 94% en poids, et/ou jusqu'à 96% en poids.

3. Procédé d'utilisation de la pierre synthétique de fluorite selon la revendication 1, le procédé comprenant :
l'ajout d'une pluralité de pierres synthétiques de fluorite à un four de fabrication d'acier contenant du laitier et de l'acier fondu ; de préférence (i) dans lequel l'ajout des pierres synthétiques de fluorite réduit la viscosité du laitier, ou (ii) dans lequel l'ajout des pierres synthétiques de fluorite augmente la capacité du laitier à éliminer le soufre de l'acier fondu.

4. Procédé de fabrication de pierres synthétiques de fluorite, le procédé comprenant :
la formulation d'un mélange particulaire comportant :
des cristaux de CaF₂ à une concentration d'au moins 70% en poids ; et
un excipient ayant un rapport pondéral prédéterminé de Ca à Si ;
la préparation des agrégats à partir du mélange particulaire ; et
le traitement thermique des agrégats pour former une pluralité de pierres synthétiques de fluorite, chaque pierre synthétique de fluorite comprenant : une matrice de verre comprenant Ca, Si et O ; et des cristaux de CaF₂ dispersés dans la matrice de verre à une concentration d'au moins 70% en poids.

5. Procédé selon la revendication 4, dans lequel la formulation du mélange particulaire comprend :
(a) l'obtention de matériaux particulaires issus des opérations minières ;
(b) la détermination de la teneur chimique des particules ; de préférence (i) la détermination de la teneur en Ca, F et Si, ou (ii) la réalisation d'une analyse par fluorescence X sur les particules ; de manière davantage préférée, comprenant en outre l'estimation de la quantité de CaF₂, SiO₂, CaO et/ou CaCO₃ ; et
(c) la combinaison des fractions sélectionnées des matériaux particulaires pour former le mélange particulaire.

6. Procédé selon la revendication 4, comprenant en outre, après la formulation du mélange particulaire, l'ajout d'un ou de plusieurs matériaux particulaires supplémentaires au mélange particulaire, de préférence dans lequel les un ou plusieurs matériaux particulaires supplémentaires sont choisis dans le groupe constitué de Al₂O₃ et de MgO.

7. Pierre synthétique de fluorite selon la revendication 1 ou le procédé selon la revendication 4, dans lequel le rapport pondéral prédéterminé est supérieur à 1, de préférence dans lequel le rapport pondéral prédéterminé est compris entre 2: 1 et 4: 1 ; ou dans lequel le rapport pondéral prédéterminé est inférieur à 1.

8. Procédé selon la revendication 4, dans lequel la préparation des agrégats comprend le mélange d'un liant au mélange particulaire, le liant étant choisi dans le groupe constitué : d'un liant organique, d'un liant inorganique et d'un liant aqueux ; de préférence (i) dans lequel le liant comprend une solution de silicate de sodium (verre soluble), ou (ii) dans lequel le liant est ajouté en une quantité de 2% en poids à 10% en poids, ou de 5% en poids à 7% en poids.

9. Procédé selon la revendication 4, dans lequel la préparation des granulats comprend la granulation, le compactage, l'extrusion, la pelletisation et/ou le briquetage ; ou dans lequel le procédé comprend en outre, avant le traitement thermique des granulats, le séchage des granulats pour améliorer leur résistance à l'état vert, de préférence dans lequel le séchage comprend l'évaporation ou le durcissement du liant.

10. Procédé selon la revendication 4, dans lequel les agrégats sont traités thermiquement à une température d'au moins 950°C, ou d'au moins 1000°C, et/ou ne dépassant pas 1200°C ; ou dans lequel les agrégats sont traités thermiquement pendant une durée d'au moins 20 minutes, d'au moins 40 minutes, d'au moins 60 minutes et/ou jusqu'à 120 minutes ; ou dans lequel les agrégats sont traités thermiquement jusqu'à ce que les cristaux de CaCO₃, CaO et/ou SiO₂ ne soient plus détectables par diffraction des rayons X ; ou dans lequel le traitement thermique comprend un chauffage au four ou un chauffage par micro-ondes, de préférence dans lequel, avant de réaliser le chauffage par micro-ondes, l'agrégat est enrobé dans un matériau suscepteur.

11. Pierre synthétique de fluorite selon la revendication 1 ou le procédé selon la revendication 4, dans lequel la matrice de verre comprend un ou plusieurs silicates et/ou oxydes ; ou dans lequel la matrice de verre comprend un composé Ca-Si-O choisi dans le groupe constitué de Ca₂SiO₃ et Ca₂SiO₄ (2CaO·SiO₂) ; ou dans lequel la matrice de verre est partiellement fluorée ; ou dans lequel la matrice de verre comprend du CaO libre à une concentration inférieure à 1% en poids.

12. Pierre synthétique de fluorite selon la revendication 1 ou le procédé selon la revendication 4, dans lequel les cristaux de CaF₂ ont une taille linéaire comprise entre 500 nm et 500 microns, de préférence dans lequel la taille linéaire est comprise entre 1 micron et 150 microns ; ou dans lequel les cristaux de CaF₂ ont une distribution de taille multimodale.

13. Pierre synthétique de fluorite selon la revendication 1 ou le procédé selon la revendication 4, dans lequel chaque pierre synthétique de fluorite comprend en outre des cristaux de SiO₂ dispersés dans la matrice de verre ; ou dans lequel chaque pierre synthétique de fluorite comprend en outre des cristaux de Al₂O₃ et/ou des cristaux de MgO dispersés dans la matrice de verre.

14. Pierre synthétique de fluorite selon la revendication 1 ou le procédé selon la revendication 4, dans lequel les pierres synthétiques de fluorite comportent du carbone (C) à une concentration inférieure à 1% en poids et/ou sont dépourvues de carbone ; ou dans lequel les pierres synthétiques de fluorite comportent du carbonate de calcium CaCO₃ à une concentration inférieure à 2% en poids et/ou sont dépourvues de CaCO₃; ou dans lequel les pierres synthétiques de fluorite comportent du soufre (S) à une concentration inférieure à 0,1% en poids et/ou sont dépourvues de soufre (S); ou dans lequel les pierres synthétiques de fluorite comportent du phosphore (P) à une concentration inférieure à 0,1 % en poids et/ou sont dépourvues de phosphore (P) ; ou dans lequel les pierres synthétiques de fluorite sont dépourvues de liant.

15. Pierre synthétique de fluorite selon la revendication 1 ou le procédé selon la revendication 4, dans laquelle les pierres synthétiques de fluorite présentent une densité comprise entre 2, 2 g/cm³ et 3 g/cm³ , déterminée par l'essai de flottabilité selon le principe d'Archimède ; ou dans laquelle, après avoir été soumises à un essai de rotation sur tambour pendant 60 minutes, la perte de masse des pierres synthétiques de fluorite est inférieure ou égale à 7% en poids ; ou dans laquelle les pierres synthétiques de fluorite résistent à une force de compression moyenne d'au moins 1 330 N avant rupture ; ou dans laquelle les pierres synthétiques de fluorite présentent une absorption d'eau inférieure ou égale à 0,1% en poids après six jours dans une chambre d'humidité (humidité relative > 90%) ; ou dans laquelle les pierres synthétiques de fluorite ont une taille nominale comprise entre quelques millimètres et quelques centimètres.
